# EUROPEAN PATENT APPLICATION

(11) **EP 3 046 209 A1**
(43) Date of publication of application: **20.07.2016**
(21) Application number: 14843251.1
(22) Date of filing: 15.04.2014
(51) Int. Cl.: H02J 7/00, H02H 7/18

(54) **OVERCHARGE PROTECTION DEVICE**

(30) Priority: 10.09.2013 JP 2013187633
(71) Applicant: Kabushiki Kaisha Toshiba, Minato-ku Tokyo 105-8001 (JP)
(72) Inventor: KURODA, Kazuto, Tokyo 105-8001 (JP); KOSUGI, Shinichiro, Tokyo 105-8001 (JP); SEKINO, Masahiro, Tokyo 105-8001 (JP); NOZAWA, Shigeru, Tokyo 105-8001 (JP); GYODA, Minoru, Tokyo 105-8001 (JP); SAEKI, Yosuke, Tokyo 105-8001 (JP); KANBE, Fuyuki, Tokyo 105-8001 (JP)
(74) Representative: Awapatent AB
(86) International application number: PCT/JP2014/060749
(87) International publication number: WO 2015/037266

(57) **Abstract**

An overcharge protection device according to an embodiment includes a switching unit and a controller. The switching unit includes a plurality of switching elements connected in series. The plurality of switching elements is connected in parallel to a fuse and a rechargeable battery. The fuse is interposed between and connected to the rechargeable battery and a charger configured to charge the rechargeable battery. The controller detects output voltage of the rechargeable battery, and, if the detected output voltage exceeds a certain overcharge detection voltage, short-circuits a positive electrode terminal and a negative electrode terminal of the rechargeable battery by turning on the switching elements.

## Description

### FIELD

Embodiments described herein relate generally to an overcharge protection device.

### BACKGROUND

In a rechargeable battery apparatus including a semiconductor element as an interrupting element for interrupting connection between a rechargeable battery and a main circuit, a mechanism is adopted in preparation for a case when some fault has occurred in the interrupting element and made it impossible to interrupt connection between the rechargeable battery and the main circuit. The mechanism employs a fuse provided with a heater called a fusing resistor and is configured to pass current through the heater to melt and break the fuse, so that connection between the rechargeable battery and the main circuit can be interrupted.

### CITATION LIST

### Patent Literature

Patent Literature 1: Japanese Patent Application Laid-open No. 2012-182885

### SUMMARY OF THE INVENTION

### Problem to be Solved by the Invention

However, a rechargeable battery apparatus including a large rechargeable battery does not include a fuse that can be melted and broken by a heater, and therefore, in order to melt and break a fuse, needs a mechanism that forcibly short-circuits the rechargeable battery to melt and break the fuse.

### Means for Solving Problem

An overcharge protection device of an embodiment comprises a switching unit, and a controller. In the switching unit, a plurality of switching elements connected in series is connected in parallel to a fuse and a rechargeable battery. The fuse is interposed between and connected to the rechargeable battery and a charger configured to charge the rechargeable battery. The controller detects output voltage of the rechargeable battery, and short-circuits a positive electrode terminal and a negative electrode terminal of the rechargeable battery by turning on the switching elements when the detected output voltage exceeds a certain overcharge detection voltage.

### BRIEF DESCRIPTION OF DRAWINGS

FIG. 1 is a diagram illustrating the configuration of a rechargeable battery apparatus according to a first embodiment.
FIG. 2 is a diagram illustrating the specific configuration of the overcharge protection device included in the rechargeable battery apparatus according to the first embodiment.
FIG. 3 is a flowchart illustrating the procedure of a process that the overcharge protection device according to the first embodiment performs for detecting a fault in an overcharge protection field effect transistor (FET).
FIG. 4 is a diagram illustrating the specific configuration of an overcharge protection device included in a rechargeable battery apparatus according to a second embodiment.
FIG. 5 is a diagram illustrating one example of a wiring board included in an overcharge protection device according to a third embodiment.
FIG. 6 is a diagram illustrating the configuration of a rechargeable battery apparatus according to a modification.

### DETAILED DESCRIPTION

The following describes, with reference to the accompanying drawings, a rechargeable battery apparatus to which an overcharge protection device according to each of the present embodiments is applied.

### First Embodiment

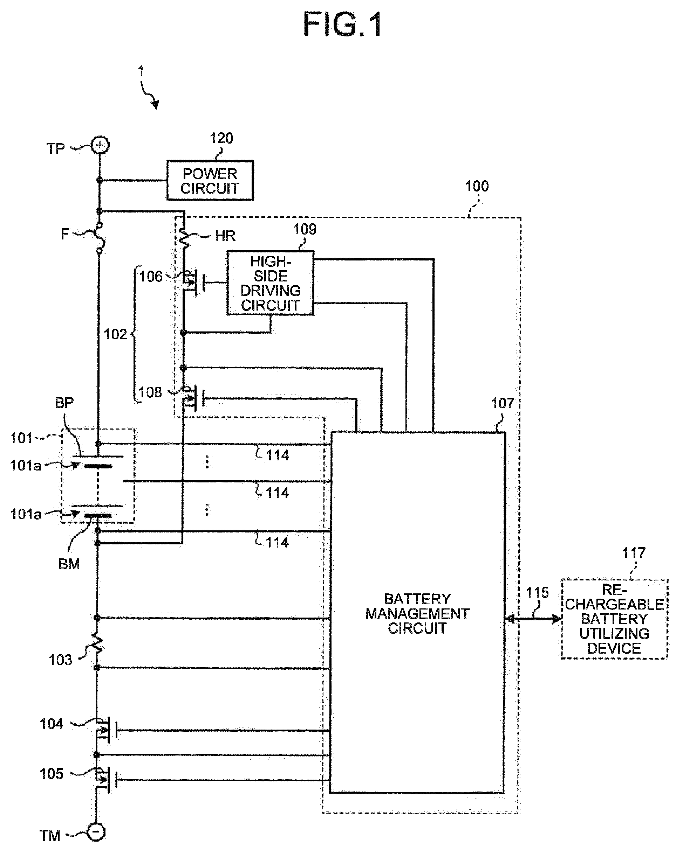

FIG. 1 is a diagram illustrating the configuration of a rechargeable battery apparatus according to a first embodiment. A rechargeable battery apparatus 1 according to the present embodiment includes a battery module 101, a shunt resistor 103, a charge controlling field effect transistor (FET) 104, a discharge controlling FET 105, a fuse F, a positive-electrode main circuit terminal TP, a negative-electrode main circuit terminal TM, an overcharge protection device 100, and a power circuit 120, as illustrated in FIG. 1. The rechargeable battery apparatus 1 is connected to a rechargeable battery utilizing device 117 (one example of a charger) that charges and discharges the battery module 101. Specifically, the positive-electrode main circuit terminal TP is connected to a positive-side terminal (a positive-side main circuit) of the rechargeable battery utilizing device 117. Furthermore, the negative-electrode main circuit terminal TM is connected to a negative-side terminal (a negative-side main circuit) of the rechargeable battery utilizing device 117. Furthermore, the rechargeable battery utilizing device 117 is connected via a communication line 115 to a battery management device 107 to be described later.

The power circuit 120 supplies power from the battery module 101 or from the rechargeable battery utilizing device 117 to the entirety of the rechargeable battery apparatus 1.

The battery module 101 (one example of a rechargeable battery) includes a plurality of battery cells 101a (for example, secondary batteries such as lithium-ion batteries or lead-acid batteries) connected in series. The battery module 101 thus supplies power to the rechargeable battery utilizing device 117 connected thereto via the positive-electrode main circuit terminal TP and the negative-electrode main circuit terminal TM, which are to be described later.

The positive-electrode main circuit terminal TP is a terminal for supplying power from the battery module 101 to the rechargeable battery utilizing device 117 by being connected to the high-potential side of the battery module 101. The negative-electrode main circuit terminal TM is a terminal for supplying power from the battery module 101 to the rechargeable battery utilizing device 117 by being connected to the low-potential side of the battery module 101.

The fuse F is interposed between and connected to the battery module 101 and the rechargeable battery utilizing device 117. In the present embodiment, the fuse F is connected to the high-potential side of the battery module 101. The fuse F thus interrupts connection between the battery module 101 and the rechargeable battery utilizing device 117 when overcurrent flows through the rechargeable battery utilizing device 117 from the battery module 101 or when the battery module 101 has become overcharged.

The shunt resistor 103 is used for detecting the current magnitude of current flowing through the battery module 101. In the present embodiment, the shunt resistor 103 is connected to the low-potential side of the battery module 101.

The charge controlling FET 104 is constructed of a negative channel metal oxide semiconductor (NMOS)-FET and is interposed between and connected to the battery module 101 and the rechargeable battery utilizing device 117. Furthermore, in the present embodiment, a rectifying diode (not illustrated) that passes current when power is supplied from the battery module 101 to the rechargeable battery utilizing device 117 is connected in parallel to the charge controlling FET 104.

The discharge controlling FET 105 is constructed of an NMOS-FET and is interposed between and connected to the battery module 101 and the rechargeable battery utilizing device 117. Furthermore, in the present embodiment, a rectifying diode (not illustrated) that passes current when the battery module 101 is charged with power supplied from the rechargeable battery utilizing device 117 is connected in parallel to the discharge controlling FET 105.

In the present embodiment, the charge controlling FET 104 and the discharge controlling FET 105 are constructed of NMOS-FETs. They can also be constructed of positive channel metal oxide semiconductor (PMOS)-FETs or insulated gate bipolar transistors (IGBTs). Alternatively, bipolar transistors can be used as the charge controlling FET 104 and the discharge controlling FET 105. Using bipolar transistors as the charge controlling FET 104 and the discharge controlling FET 105 necessitates power controlling circuits provided thereto that control the ON and OFF states of the bipolar transistors by passing current through the bases of the bipolar transistors.

The overcharge protection device 100 is a device that can interrupt current that flows from the rechargeable battery utilizing device 117 to the battery module 101 while the battery module 101 is on charge. In the present embodiment, the overcharge protection device 100 includes a wiring board HR, a switching unit 102, the battery management circuit 107, and a high-side (high-potential side) driving circuit 109.

The switching unit 102 has two overcharge protection FETs 106 and 108 (one example of a plurality of switching elements), which are connected to each other in series, connected to the battery module 101 and the fuse F in parallel. In the present embodiment, the overcharge protection FETs 106 and 108 are constructed of NMOS-FETs. However, this is not a limiting example, and PMOS-FETs or IGBTs may be used for example. Alternatively, bipolar transistors can be used as the overcharge protection FETs 106 and 108. Using bipolar transistors as the overcharge protection FETs 106 and 108 necessitates power controlling circuits provided thereto that control the ON and OFF states of the bipolar transistors by passing current through the bases of the bipolar transistors. Furthermore, although including two overcharge protection FETs 106 and 108 in the present embodiment, the switching unit 102 only needs including a plurality of switching elements connected to one another in series, and may include three or more switching elements connected in series, for example.

The wiring board HR includes a current-limiting resistor formed of a wiring pattern connected in series to the overcharge protection FETs 106 and 108 included in the switching unit 102. In the present embodiment, the current-limiting resistor is formed of a wiring pattern included in the wiring board HR. However, this is not a limiting example, and the current-limiting resistor may be formed of a resistor element.

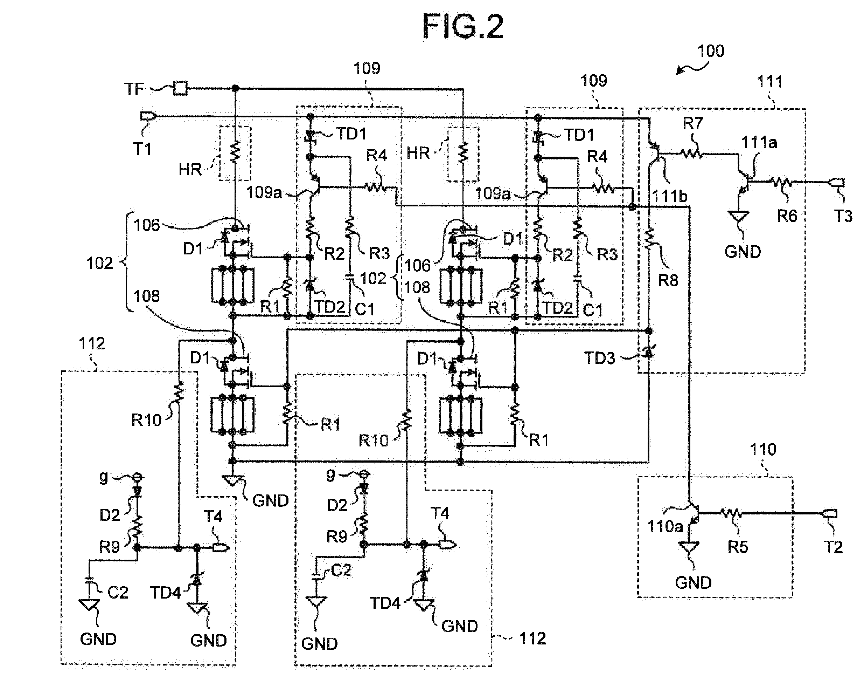

The high-side driving circuit 109 controls, in accordance with a power-supply voltage V1 applied by a control power supply G via a terminal T1 (refer to FIG. 2) and a high-side FET driving signal input from the battery management circuit 107 to be described later, the overcharge protection FET 106 of the two overcharge protection FETs 106 and 108 that is connected to the high-potential side of the battery module 101.

The battery management circuit 107 is connected via the communication line 115 to the rechargeable battery utilizing device 117 configured to control the entirety of the rechargeable battery apparatus 1, and controls, for example, charge and discharge of the battery module 101, and interruption of current that flows through the battery module 101 while the battery module 101 is on charge. Specifically, the battery management circuit 107 detects, via voltage sensor lines 114 connected to the low-potential sides and the high-potential sides of a plurality of battery cells 101a included in the battery module 101, output voltages of the respective battery cells 101a (hereinafter referred to as cell voltages). The battery management circuit 107 controls charge and discharge of the battery module 101 in based on the detected cell voltages.

Furthermore, upon receiving from the rechargeable battery utilizing device 117 a power supply instruction indicating that power should be supplied from the battery module 101 to the rechargeable battery utilizing device 117, the battery management circuit 107 outputs to the discharge controlling FET 105 a discharge controlling FET driving signal instructing it to discharge the battery module 101 in accordance with the power supply instruction. Furthermore, based on the detected results of cell voltages of a plurality of battery cells 101a, the battery management circuit 107 outputs to the charge controlling FET 104 a charge controlling FET driving signal instructing it to charge the battery module 101.

Furthermore, if any of the cell voltages exceeds a certain overcharge detection voltage while the battery module 101 is on charge, the battery management circuit 107 outputs the high-side (high-potential side) FET driving signal to the high-side driving circuit 109 to turn on the overcharge protection FET 106 connected to the high-potential side of the battery module 101, and outputs a low-side (low-potential side) FET driving signal to the gate of the overcharge protection FET 108 connected to the low-potential side of the battery module 101 to turn on the overcharge protection FET 108.

Consequently, the battery management circuit 107 (one example of a control unit) short-circuits a positive electrode terminal BP and a negative electrode terminal BM, which are terminals of the high-potential and low-potential sides of the battery module 101, if any of the cell voltages in the battery module 101 exceeds the certain overcharge detection voltage when a short-circuit fault or the like has occurred in the charge controlling FET 104 while the battery module 101 is on charge, and has resulted in failure to interrupt charge current by a charge controlling FET driving signal from the battery management circuit 107. The fuse F of the battery module 101 is melted and broken with resultant short-circuit current. Therefore, the present embodiment, despite no provision of a heater or the like for melting and breaking the fuse F, allows the battery module 101 to be protected by melting and breaking the fuse F when the battery module 101 has become overcharged while the battery module 101 is on charge.

Furthermore, in the present embodiment, the plurality of overcharge protection FETs 106 and 108 connected in series are used for short-circuiting the positive electrode terminal BP and the negative electrode terminal BM of the battery module 101. Even when a short-circuit fault has occurred in either of these overcharge protection FETs 106 and 108, the positive terminal BP and the negative electrode terminal BM are thus prevented from being short-circuited to each other. Therefore, the fuse F is prevented from being accidentally melted and broken as a result of a short-circuit fault in either of these overcharge protection FETs 106 and 108.

Furthermore, if any of the cell voltages detected while the battery module 101 is on charge exceeds the certain overcharge detection voltage, the battery management circuit 107 may turn on the overcharge protection FETs 106 and 108 and, after the elapse of a certain period of time, turn off the overcharge protection FETs 106 and 108. Consequently, according to the present embodiment, the overcharge protection FETs 106 and 108 and the wiring board HR can be prevented from breaking down when short-circuit current for melting and breaking the fuse F is passed through the overcharge protection FETs 106 and 108 for a long period of time.

Next, the specific configuration of the overcharge protection device 100 included in the rechargeable battery apparatus 1 according to the present embodiment is described based on FIG. 2. FIG. 2 is a diagram illustrating the specific configuration of the overcharge protection device included in the rechargeable battery apparatus according to the first embodiment.

The overcharge protection device 100 includes two lines each formed of the switching unit 102, as illustrated in FIG. 2. Each of the switching unit 102 includes two overcharge protection FETs 106 and 108 connected in series between a terminal TF connected to the fuse F and a ground terminal GND connected to the negative electrode terminal BM of the battery module 101. The switching unit 102 further includes rectifying diodes D1 connected in parallel to corresponding ones of the two overcharge protection FETs 106 and 108 and configured to pass current when the battery module 101 is charged. The switching unit 102 further includes pulldown resistors R1 each interposed between and connected to the gate and the source of a corresponding one of the overcharge protection FETs 106 and 108 and provided for operation stabilization to stabilize the potential difference between the gate and the source of the corresponding one of the overcharge protection FETs 106 and 108. In the present embodiment, the overcharge protection device 100 includes the switching units 102 forming the respective two lines. However, the overcharge protection device 100 may only include at least one of the switching units 102.

The overcharge protection device 100 further includes, between the terminal TF and the ground terminal GND, the wiring boards HR each connected to the corresponding two overcharge protection FETs 106 and 108 in series, as illustrated in FIG. 2.

As illustrated in FIG. 2, the overcharge protection device 100 further includes the high-side driving circuits 109 each interposed between and connected to: the terminal T1 to which the power-supply voltage V1 is input by the control power supply G, which is at the same potential as a reference power supply g to be described later; and the gate of a corresponding one of the overcharge protection FET 106. The high-side driving circuit 109 thus turns on the overcharge protection FET 106 by applying the power-supply voltage V1 of the control power supply G to the gate of the overcharge protection FET 106 in response to the high-side FET driving signal input from the battery management circuit 107.

Specifically, the high-side driving circuits 109 each include an anti-backflow diode TD1, a zener diode TD2, a controlling transistor 109a (one example of a controlling switching element), current-limiting resistors R2, R3, and R4, and a capacitor C1. Here, the controlling transistor 109a and the capacitor C1 are connected to each other in parallel between the overcharge protection FET 106 connected to the high-potential side of the battery module 101 and the terminal T1 (the control power supply G).

The anti-backflow diode TD1 is made of a zener diode, and prevents flowback of current that flows in from the reference power supply g to be described later. The controlling transistor 109a is made of a PNP transistor, and applies the power-supply voltage V1 to the gate of the overcharge protection FET 106 by being switched on when the high-side FET driving signal is input from the battery management circuit 107. The capacitor C1 is used for applying, to the overcharge protection FET 106, the power-supply voltage V1 input to the terminal T1 in order to detect an open fault in the overcharge protection FET 106. The current-limiting resistor R2 limits current that flows through the gate of the overcharge protection FET 106. The current-limiting resistor R3 limits current that flows from the capacitor C1 to an emitter of the controlling transistor 109a. The current-limiting resistor R4 limits current that flows through the base of the controlling transistor 109a when the overcharge protection FET 106 is switched on in response to the high-side FET driving signal input from the battery management circuit 107.

As illustrated in FIG. 2, the overcharge protection device 100 further includes a first control circuit 110 interposed between and connected to the base of each of the controlling transistor 109a included in the high-side driving circuit 109 and a ground terminal GND. The first control circuit 110 thus outputs the high-side FET driving signal to the high-side driving circuit 109 when a high-side FET switch-on signal for instruction to turn on a high-side FET (the overcharge protection FET 106) is input to the terminal T2 from the rechargeable battery utilizing device 117.

Specifically, the first control circuit 110 includes a grounded transistor 110a and a current-limiting resistor R5. The grounded transistor 110a is made of an NPN transistor, and is interposed between and connected to the base of the controlling transistor 109a included in the high-side driving circuit 109 and the ground terminal GND. The current-limiting resistor R5 is interposed between and connected to the base of the grounded transistor 110a and the terminal T2 and limits current that flows through the base of the grounded transistor 110a. The first control circuit 110 outputs the high-side FET driving signal to the high-side driving circuit 109 by passing current from the base of the controlling transistor 109a in the high-side driving circuit 109 to the ground terminal GND when the grounded transistor 110a has been switched on in response to the high-side FET switch-on signal input to the terminal T2.

As illustrated in FIG. 2, the overcharge protection device 100 further includes a second control circuit 111 interposed between and connected to the terminal T1 and the gate of the overcharge protection FET 108 and configured to output a low-side FET driving signal to the gate of this overcharge protection FET 108. The second control circuit 111 thus outputs the low-side FET driving signal to the gate of the overcharge protection FET 108 when a low-side FET switch-on signal for instruction to turn on a low-side FET (the overcharge protection FET 108) has been input to the terminal T3 from the rechargeable battery utilizing device 117.

Specifically, the second control circuit 111 includes a grounded transistor 111a, a driving transistor 111b, current-limiting resistors R6, R7, and R8, and a zenor diode TD3. The grounded transistor 111a is made of an NPN transistor, and is interposed between and connected to the base of the driving transistor 111b to be described later and the ground terminal GND. The driving transistor 111b is made of a PNP transistor, and is interposed between and connected to the terminal T1 and the gate of the overcharge protection FET 108. The current-limiting resistor R6 limits current that flows through the base of the grounded transistor 111a. The current-limiting resistor R7 limits current that flows through the base of the driving transistor 111b. The current-limiting resistor R8 limits current that flows through the gate of the overcharge protection FET 108. The zenor diode TD3 maintains the low-side FET driving signal (voltage) applied to the overcharge protection FET 108 at a constant voltage.

The second control circuit 111 outputs the low-side FET driving signal to the gate of the overcharge protection FET 108 by passing current through the base of the driving transistor 111b to apply the power-supply voltage V1 to the gate of the overcharge protection FET 108 when the grounded transistor 111a has been switched on in response to the low-side FET switch-on signal input to the terminal T3.

The overcharge protection device 100 further includes two lines each formed of a fault detecting circuit 112 that correspond to the respective switching units 102, as illustrated in FIG. 2. Each of the fault detecting circuits 112 is interposed between and connected to a part between the overcharge protection FETs 106 and 108 (one example of adjacent switching elements) and the reference power supply g to be described later.

Specifically, the fault detecting circuit 112 includes the reference power supply g, an anti-flowback diode D2, voltage dividing resistors R9 and R10, a zenor diode TD4, a capacitor C2, and a terminal T4. The reference power supply g is capable of applying, to the voltage dividing resistor R9 and R10, a reference voltage V2 that is used in detecting a fault in the overcharge protection FETs 106 and 108. The anti-flowback diode D2 prevents current which is flowing from the battery module101 from flowing into the reference power supply g through the terminal TF while the overcharge protection FET 106 is in the ON state. The voltage dividing resistors R9 and R10 are connected to each other in series while being interposed between and connected to a part between the overcharge protection FETs 106 and 108 and the reference power supply g, and are capable of dividing the reference voltage V2. The terminal T4 outputs a monitor voltage, which is a voltage between the two voltage dividing resistors R9 and R10. The zenor diode TD4 stabilizes the monitor voltage to be output from the terminal T4. The capacitor C2 removes noise from the monitor voltage to be output from the terminal T4.

The battery management circuit 107 thus detects the monitor voltage between the voltage dividing resistors R9 and R10, and, based on the detected monitor voltage, detects a fault in the overcharge protection FETs 106 and 108.

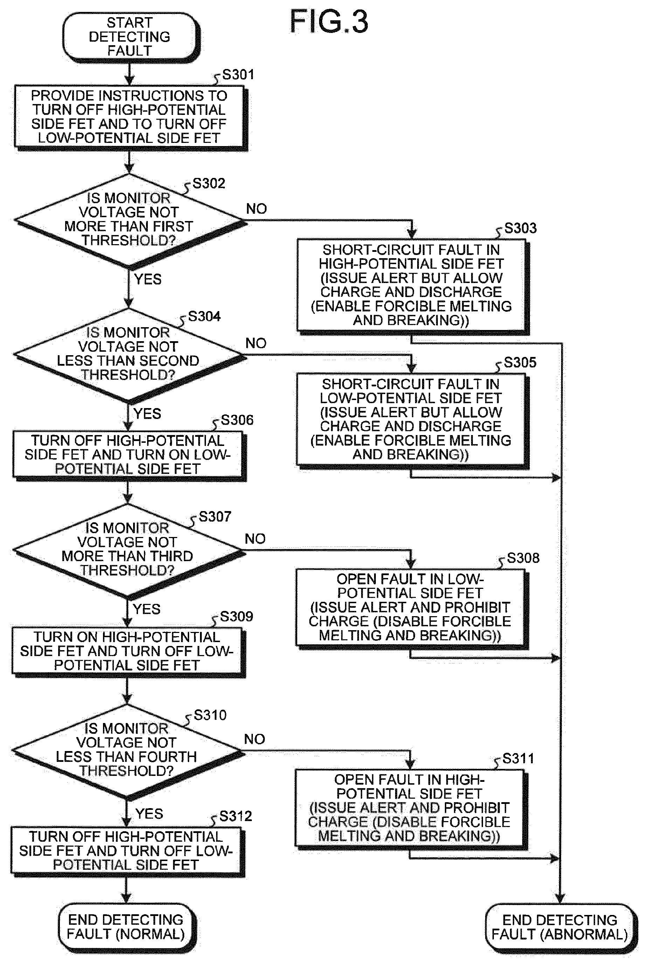

The following describes, with reference to FIG. 2 and FIG. 3, operation that the overcharge protection device 100 performs to detect a fault in the overcharge protection FETs 106 and 108. FIG. 3 is a flowchart illustrating the procedure of a process that the overcharge protection device according to the first embodiment performs for detecting a fault in an overcharge protection field effect transistor (FET).

Upon being instructed by the rechargeable battery utilizing device 117 to start detecting a fault in the overcharge protection FETs 106 and 108, the battery management circuit 107 first prohibits the high-side FET driving signal from being output to the high-side driving circuit 109 and the low-side FET driving signal from being output to the overcharge protection FET 108, and provides instructions to turn off the overcharge protection FET 106 (a high-potential side FET) and the overcharge protection FET 108 (a low-potential side FET) (Step S301). The battery management circuit 107 determines whether the monitor voltage, which is output from the terminal T4 when instructions to turn off the overcharge protection FETs 106 and 108, is not higher than a first short-circuit fault detection voltage (in the present embodiment, a first threshold, which is a voltage to which the reference voltage V2 is dropped by the anti-flowback diode D2) that is based on the reference voltage V2 of the reference power supply g (Step S302).

Here, when the overcharge protection FET 106 is in the normal OFF state, current from the battery module 101 does not flow into the terminal T4 through the voltage dividing resistor R10. Consequently, the terminal T4 outputs a monitor voltage to which the reference voltage V2 of the reference power supply g has been dropped by the anti-flowback diode D2, or a monitor voltage into which the reference voltage V2 has been divided by the voltage dividing resistors R9 and R10. In contrast, when a short-circuit fault has occurred in the overcharge protection FET 106, current from the battery module 101 flows into the terminal T4 through the voltage dividing resistor R10. Consequently, the terminal T4 outputs a battery voltage of the battery module 101 as the monitor voltage.

Therefore, when the terminal T4 has output the monitor voltage not exceeding the first threshold (Step S302: Yes), the battery management circuit 107 determines that a short-circuit fault has not occurred in the overcharge protection FET 106. On the other hand, when the terminal T4 has output the monitor voltage exceeding the first threshold (Step S302: No), the battery management circuit 107 detects a short-circuit fault in the overcharge protection FET 106 (Step S303). Upon detection thereof, the battery management circuit 107 can display on a display unit (not illustrated) an alert indicating that a short-circuit fault has been detected in the overcharge protection FET 106, and forcibly melt and break the overcharge protection FET 106 by allowing the battery module 101 to be charged and discharged.

Subsequently, if a short-circuit fault has not been detected in the overcharge protection FET 106, the battery management circuit 107 determines whether the monitor voltage output from the terminal T4 upon being instructed to turn off the overcharge protection FETs 106 and 108 is equal to or exceeds a second short-circuit fault detection voltage (in the present embodiment, a second threshold, which is a voltage into which the reference voltage V2 is divided by the anti-flowback diode D2 and the voltage dividing resistors R9 and R10) that is based on the reference voltage V2 obtained by voltage division by the voltage dividing resistors R9 and R10 (Step S304).

Here, when the overcharge protection FET 108 is in the normal OFF state, current from the reference power supply g does not flow into the overcharge protection FET 108. Consequently, the terminal T4 outputs, as the monitor voltage, a voltage to which the reference voltage V2 of the reference power supply g is dropped by the anti-flowback diode D2. In contrast, when a short-circuit fault has occurred in the overcharge protection FET 108, current from the reference power supply g flows into the ground terminal GND through the voltage dividing resistors R9 and R10 and the overcharge protection FET 108. Consequently, the terminal T4 outputs, as the monitor voltage, a voltage into which the reference voltage V2 is divided by the voltage dividing resistors R9 and R10.

Therefore, when the terminal T4 has output the monitor voltage that is not less than the second threshold (Step S304: Yes), the battery management circuit 107 determines that a short-circuit fault has not occurred in the overcharge protection FET 108. On the other hand, when the terminal T4 has output the monitor voltage that is less than the second threshold (Step S304: No), the battery management circuit 107 detects a short-circuit fault in the overcharge protection FET 108 (Step S305). Upon detection thereof, the battery management circuit 107 can display on a display unit (not illustrated) an alert indicating that a short-circuit fault has occurred in the overcharge protection FET 108, and forcibly melt and break the overcharge protection FET 108 by allowing the battery module 101 to be charged and discharged.

Subsequently, if a short-circuit fault has not been detected in the overcharge protection FET 108, the battery management circuit 107 prohibits the high-side FET driving signal from being output to the high-side driving circuit 109 and outputs the low-side FET driving signal to the overcharge protection FET 108, thereby providing instructions to turn off the overcharge protection FET 106 (a high-potential side FET) and to turn on the overcharge protection FET 108 (a low-potential side FET) (Step S306). The battery management circuit 107 then determines whether the monitor voltage output from the terminal T4 when instructions to turn off the overcharge protection FET 106 and turn on the overcharge protection FET 108 are provided is not more than a first open fault detection voltage (in the present embodiment, a third threshold, which is a voltage into which the reference voltage V2 is divided by the anti-flowback diode D2 and the voltage dividing resistors R9 and R10) based on the reference voltage V2 subjected to voltage dividing by the voltage dividing resistors R9 and R10 (Step S307).

Here, when the overcharge protection FET 108 is in the normal ON state, current from the reference power supply g flows into the ground terminal GND through the voltage dividing resistors R9 and R10 and the overcharge protection FET 108. Consequently, the terminal T4 outputs, as the monitor voltage, a voltage into which the reference voltage V2 is divided by the voltage dividing resistors R9 and R10. On the other hand, when an open fault has occurred in the overcharge protection FET 108, current from the reference power supply g does not flow into the overcharge protection FET 108. Consequently, the terminal T4 outputs, as the monitor voltage, a voltage to which the reference voltage V2 of the reference power supply g is dropped by the anti-flowback diode D2.

Therefore, when the terminal T4 has output the monitor voltage that is not more than the third threshold (Step S307: Yes), the battery management circuit 107 determines that an open fault has not occurred in the overcharge protection FET 108. On the other hand, when the terminal T4 has output the monitor voltage that is more than the third threshold (Step S307: No), the battery management circuit 107 detects an open fault in the overcharge protection FET 108 (Step S308). Upon this detection, the battery management circuit 107 displays an alert indicating that an open fault has occurred in the overcharge protection FET 108 on a display unit (not illustrated) and prohibits the battery module 101 from being charged. In this case, the overcharge protection FET 108 has an open fault and cannot be forcibly melted and broken.

Subsequently, if an open fault has not been detected in the overcharge protection FET 108, the battery management circuit 107 prohibits the low-side FET driving signal to be output to the overcharge protection FET 108 and then outputs the high-side FET driving signal to the high-side driving circuit 109, thereby providing instructions to turn on the overcharge protection FET 106 (the high-potential side FET) and to turn off the overcharge protection FET 108 (the low-potential side FET)

(Step S309). The battery management circuit 107 then determines whether the monitor voltage output from the terminal T4 in response to instructions to turn on the overcharge protection FET 106 and turn off the overcharge protection FET 108 is not less than a second open fault detection voltage (in the present embodiment, a fourth threshold, which is a voltage to which the reference voltage V2 is dropped by the anti-flowback diode D2) based on the reference voltage V2 (Step S310).

In the present embodiment, the control power supply G and the reference power supply g are at the same potential. Consequently, when the reference voltage V2 has been output from the terminal T4 in accordance with the reference power supply g, current cannot be passed through the controlling transistor 109a, and the overcharge protection FET 106 cannot be switched on. To avoid this situation, the capacitor C1 is connected to the controlling transistor 109a in series. After the instruction to turn off the overcharge protection FET 108 is provided, this connection enables current to flow through the controlling transistor 109a during a period until the capacitor C1 reaches saturation after the instruction to turn on the overcharge protection FET 106 is provided. The overcharge protection FET 106 is thus turned on.

Consequently, the battery management circuit 107 can detect an open fault in the overcharge protection FET 106 by using the monitor voltage detected during a period, which is a period until the capacitor C1 reaches saturation after the instruction to turn on the overcharge protection FET 106 is provided, after the instruction to turn off the overcharge protection FET 108 is provided.

Here when the overcharge protection FET 106 is in the normal ON state, current from the battery module 101 flows into the terminal T4 through the voltage dividing resistor R10. Consequently, the terminal T4 outputs a battery voltage of the battery module 101 as the monitor voltage. In contrast, when the overcharge protection FET 106 has an open fault, current from the battery module 101 does not flow into the terminal T4 through the voltage dividing resistor R10. Consequently, the terminal T4 outputs, as the monitor voltage, a voltage to which the reference voltage V2 of the reference power supply g is dropped by the anti-flowback diode D2.

Therefore, when the monitor voltage output from the terminal T4 is not less than the fourth threshold (Step S307: Yes), the battery management circuit 107 determines that the overcharge protection FET 106 does not have an open fault. On the other hand, when the monitor voltage output from the terminal T4 is less than the fourth threshold (Step S310: No), the battery management circuit 107 detects an open fault in the overcharge protection FET 106 (Step S311). Upon this detection, the battery management circuit 107 displays an alert, indicating that an open fault has occurred in the overcharge protection FET 106, on a display unit (not illustrated) and prohibits the battery module 101 from being charged. In this case, the overcharge protection FET 106 has an open fault, and cannot be forcibly melted and broken.

On the other hand, when an open fault in the overcharge protection FET 106 has not been detected, the battery management circuit 107 prohibits the output of the high-side FET driving signal to the high-side driving circuit 109 and the high-side FET driving signal and the output of the low-side FET driving signal to the overcharge protection FET 108, thereby providing instructions to turn off the overcharge protection FET 106 (a high-potential side FET) and the overcharge protection FET 108 (a low-potential side FET) (Step S312).

Thus, while the battery module 101 is on charge, when a short-circuit fault or the like has occurred in the charge controlling FET 104 and made it impossible to interrupt charge current by the charge controlling FET driving signal from the battery management circuit 107, and a cell voltage has consequently exceeded a certain overcharge detection voltage of the battery module 101, the overcharge protection device 100 according to the first embodiment short-circuits the positive electrode terminal BP, which is a terminal at the high-potential side of the battery module 101, and the negative electrode terminal BM, which is a terminal at the low-potential side of the battery module 101, and melts and breaks the fuse F with short-circuit current from the battery module 101. In this manner, the overcharge protection device 100 can protect, without a heater for melting and breaking the fuse F being provided thereto, the battery module 101 when the battery module 101 has become overcharged during charge of the battery module 101.

### Second Embodiment

The present embodiment is an exemplary case of dividing the battery voltage (the monitor voltage) and limiting a battery voltage of a battery module output as a monitor voltage, when a fault in overcharge protection FETs (a high-potential side FET and a low-potential side FET) is detected with the high-potential side FET switched on and the low-potential side FET switched off. Descriptions of the same parts as those of the first embodiment are omitted in the following description.

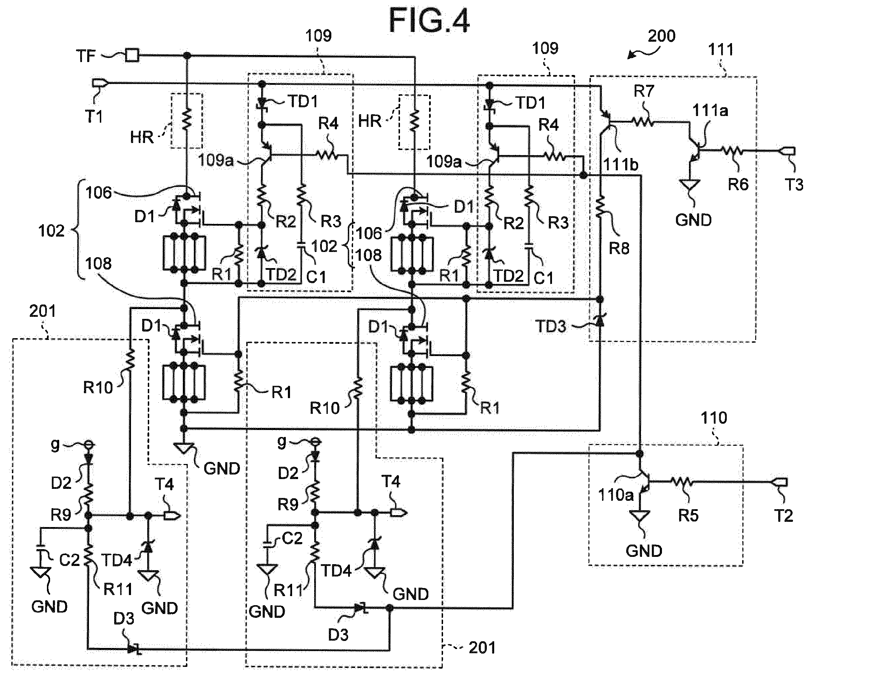

FIG. 4 is a diagram illustrating the specific configuration of an overcharge protection device included in a rechargeable battery apparatus according to the second embodiment. A fault detecting circuit 201 in an overcharge protection device 200 according to the present embodiment includes a current-limiting resistor R1 and an anti-flowback diode D3, as illustrated in FIG. 4, in addition to the reference power supply g, the anti-flowback diode D2, the voltage dividing resistors R9 and R10, the zenor diode TD4, the capacitor C2, and the terminal T4.

The anti-flowback diode D3 prevents flowback of current from the ground terminal GND to the reference power supply g. Each current-limiting resistor R11 limits current that flows from the reference power voltage g (or the terminal TF) into the grounded transistor 110a in the first control circuit 110 when the grounded transistor 110a is in the ON state.

Furthermore, when instructions to set the overcharge protection FET 106 (a high-potential side FET) on and to set the overcharge protection FET 108 (a low-potential side FET) off are provided for detecting a fault in the overcharge protection FETs 106 and 108 (Step S309 illustrated in FIG. 3), the current-limiting resistor R11 and the voltage dividing resistor R10 causes a voltage, which is a voltage having been obtained by dividing the battery voltage of the battery module 101, to be output as the monitor voltage from the terminal T4. Consequently, the battery voltage of the battery module 101, which is output as the monitor voltage from the terminal T4, can be limited. Therefore, a fault in the overcharge protection FETs 106 and 108 can be detected more safely.

Thus, when instructions to set the overcharge protection FET 106 (a high-potential side FET) on and to set the overcharge protection FET 108 (a low-potential side FET) off are provided for detecting a fault in the overcharge protection FETs 106 and 108, the overcharge protection device 200 according to the second embodiment can limit the battery voltage of the battery module 101 that is output as the monitor voltage from the terminal T4. Therefore, a fault in the overcharge protection FETs 106 and 108 can be detected more safely.

### Third Embodiment

The present embodiment is an exemplary case of a wiring board, where the wiring board includes a ground layer provided so as to cover a current-limiting resistor constructed of a wiring pattern connected in series to overcharge protection FETs. Descriptions of the same parts as those of the first embodiment are omitted in the following description.

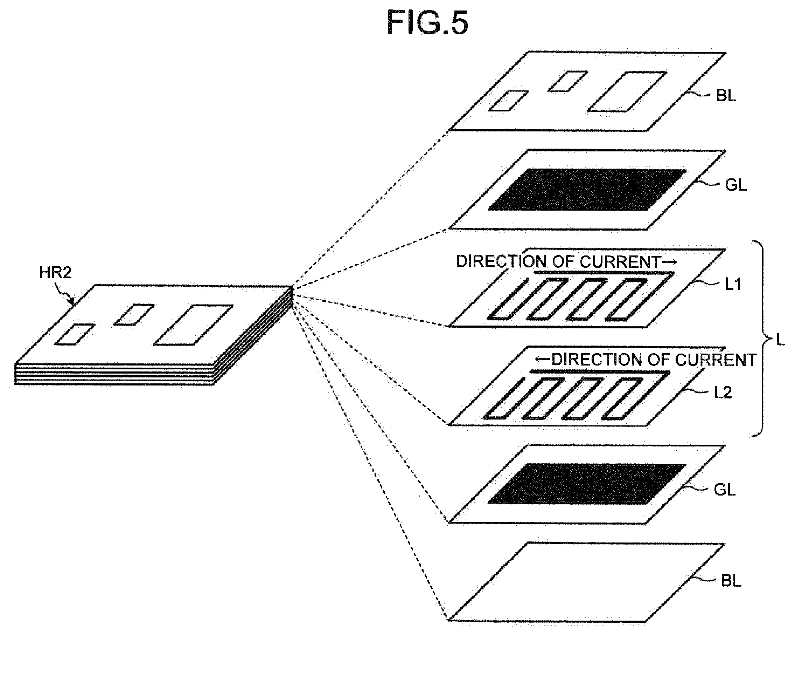

FIG. 5 is a diagram illustrating one example of a wiring board included in an overcharge protection device according to a third embodiment. In the present embodiment, as illustrated in FIG. 5, the wiring board HR2 includes: a current-limiting resistance layer L including current-limiting resistors (wiring patterns L1 and L2) connected in series to the overcharge protection FETs 106 and 108; ground layers GL having this current-limiting resistance layer L inserted vertically therebetween and electrostatically shielding the current-limiting resistance layer L; and a wiring layers BL having various components and wirings of a rechargeable battery apparatus 1 provided thereon.

The ground layers GL are formed of solid patterns as illustrated in FIG. 5, and electrostatically shield induced noise due to passing and stopping of current that flows through the current-limiting resistors (wiring patterns L1 and L2) in the current-limiting resistance layer L by having this current-limiting resistance layer L sandwiched vertically therebetween, thereby preventing the induced noise from affecting operation of the various components and wirings provided on the wiring layers BL. In the present embodiment, the ground layers GL has the current-limiting resistance layer L sandwiched vertically therebetween. However, the ground layers GL is not limited to this configuration, and is applicable as long as it is provided so as to cover the current-limiting resistors included in the current-limiting resistance layer L. For example, the ground layers GL may cover the current-limiting resistance layer L entirely.

The current-limiting resistance layer L includes a wiring pattern pair formed of the adjacently stacked, identical wiring patterns L1 and L2, as illustrated in FIG. 5. The two wiring patterns L1 and L2 included in the wiring pattern pair can have current flowing in opposite directions and thereby cause magnetic fields generated by the respective two wiring patterns L1 and L2 to cancel each other as illustrated in FIG. 5. Consequently, the present invention prevents induced noise, which is due to passing and stopping of current that flows through the current-limiting resistors (wiring patterns L1 and L2) in the current-limiting resistance layer L, from affecting operation of the various components and wirings provided on the wiring layers BL.

In the present embodiment, the current-limiting resistance layer L includes a single wiring pattern pair. However, the current-limiting resistance layer L is not limited to this configuration, and is applicable as long as it has a plurality of wiring patterns therein stacked in such a manner that allows magnetic fields generated with current flowing therethrough to cancel each other. For example, the current-limiting resistance layer L may include two or more wiring pattern pairs.

Thus, the wiring board HR2 according to the third embodiment includes the ground layers GL provided so as to cover the current-limiting resistance layer L including the wiring patterns L1 and L2 connected in series to the overcharge protection FETs 106 and 108, thereby electrostatically shielding induced noise due to passing and stopping of current that flows through the wiring patterns L1 and L2 in the current-limiting resistance layer L, and preventing the induced noise from affecting operation of the various components and wirings provided on the wiring layers BL.

### Modification

The present modification is an example in which a PMOS-FET is used as an overcharge protection FET connected to the high-potential side of a battery module. Descriptions of the same parts as those of the first embodiment are omitted below.

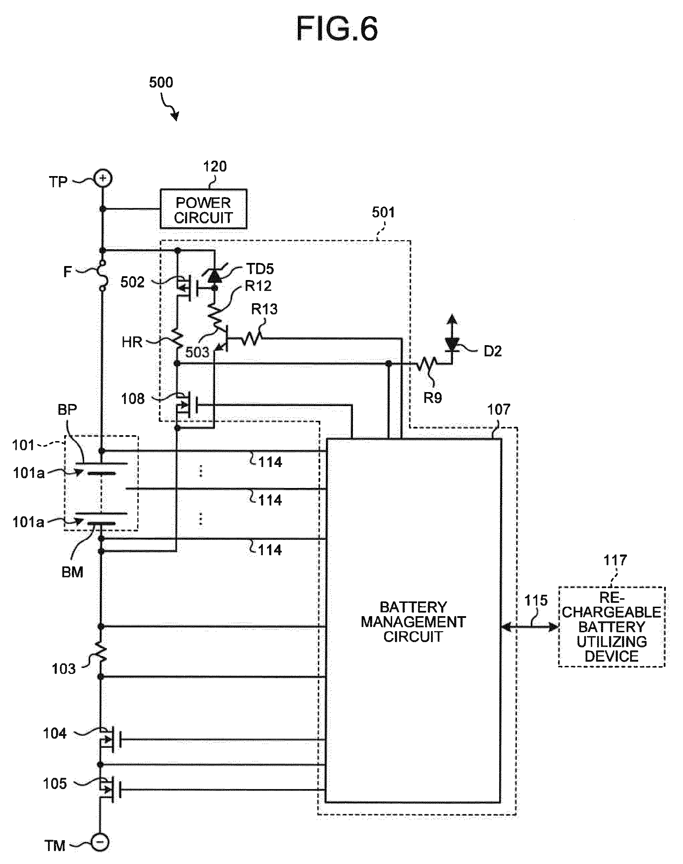

FIG. 6 is a diagram illustrating the configuration of a rechargeable battery apparatus according to the modification. As illustrated in FIG. 6, an overcharge protection device 501 of a rechargeable battery apparatus 500 according to the present embodiment includes: an overcharge protection FET 502 connected to the high-potential side of the battery module 101 and made of a PMOS-FET; a zenor diode TD5 connected to the gate and the source of the overcharge protection FET 502 therebetween and provided for stabilizing the potential between the gate and the source of the overcharge protection FET 502; a controlling transistor 503 (an NPN transistor) that is switched on in response to the high-side FET driving signal (current) input from the battery management circuit 107 and applies voltage to the gate of the overcharge protection FET 502; a current-limiting resistor R12 that limits current that flows through the gate of overcharge protection FET 502; and a current-limiting resistor R13 that limits current that flows into the base of the controlling transistor 503.

Thus, for melting and breaking the fuse F in response to the battery voltage of the battery module 101 exceeding a certain overcharge detection voltage, or for detecting a fault in the overcharge protection FETs 502 and 108, the battery management circuit 107 inputs the high-side FET driving signal to the base of the controlling transistor 503 to turn on the controlling transistor 503, thereby applying voltage to the gate of the overcharge protection FET 502 to turn on the overcharge protection FET 502.

Thus, the present modification can bring about the same effect as the first embodiment with a configuration where the overcharge protection FET 502 connected to the high-potential side of the battery module 101 is made of a PMOS-FET.

As described above, each of the first to third embodiments, despite no provision of a heater or the like for melting and breaking the fuse F, allows the fuse F to be melted and broken when the battery module 101 has become overcharged while the battery module 101 is on charge.

While certain embodiments of the present invention have been described, these embodiments have been presented by way of example only, and are not intended to limit the scope of the invention. These novel embodiments may be implemented in a variety of other forms, and various omissions, substitutions, and changes may be made without departing from the spirit of the invention. The accompanying claims and their equivalents are intended to cover such embodiments and modifications as would fall within the scope and spirit of the invention.

## Claims

1. An overcharge protection device comprising:
a switching unit in which a plurality of switching elements connected in series are connected in parallel to a fuse and a rechargeable battery, the fuse being interposed between and connected to the rechargeable battery and a charger configured to charge the rechargeable battery; and
a controller configured to detect output voltage of the rechargeable battery, and further configured to short-circuit a positive electrode terminal and a negative electrode terminal of the rechargeable battery by turning on the switching elements when the detected output voltage exceeds a certain overcharge detection voltage.

2. The overcharge protection device according to claim 1, further comprising:
a plurality of voltage-dividing resistors interposed between and connected in series to a part between the switching elements that are adjacent to each other and a reference power supply, wherein
the controller detects monitor voltage between the voltage-dividing resistors to which reference voltage is applied by the reference power supply, and, based on the detected monitor voltage, detects a fault in the switching elements.

3. The overcharge protection device according to claim 2, wherein, if the monitor voltage detected when instructions to turn off the switching elements have been provided is higher than a first short-circuit fault detection voltage based on the reference voltage, the controller detects a short-circuit fault in the switching element connected to a high-potential side of the rechargeable battery.

4. The overcharge protection device according to claim 2, wherein, if the monitor voltage detected when instructions to turn off the switching elements have been provided is lower than a second short-circuit fault detection voltage based on the reference voltage obtained by voltage division through the voltage-dividing resistors, the controller detects a short-circuit fault in the switching element connected to a low-potential side of the rechargeable battery.

5. The overcharge protection device according to claim 2, wherein, if the monitor voltage detected when instructions to turn off the switching element connected to a high-potential side of the rechargeable battery and to turn on the switching element connected to a low-potential side of the rechargeable battery have been provided is higher than a first open fault detection voltage based on the reference voltage obtained by voltage division through the voltage-dividing resistors, the controller detects an open fault in the switching element connected to the low-potential side of the rechargeable battery.

6. The overcharge protection device according to claim 2, wherein, if the monitor voltage detected when instructions to turn on the switching element connected to a high-potential side of the rechargeable battery and to turn off the switching element connected to a low-potential side of the rechargeable battery have been provided is lower than a second open fault detection voltage based on the reference voltage, the controller detects an open fault in the switching element connected to the high-potential side of the rechargeable battery.

7. The overcharge protection device according to claim 6, further comprising:
a controlling switching element and a capacitor connected in parallel between the switching element connected to the high-potential side of the rechargeable battery and a control power supply that is capable of turning on this switching element and is at the same potential as the reference power supply, wherein
the controller detects the monitor voltage during a period after the instruction to turn off the switching element connected to the low-potential side of the rechargeable battery is provided, the period being until the capacitor reaches saturation after the instruction to turn on the switching element connected to the high-potential side of the rechargeable battery is provided.

8. The overcharge protection device according to claim 1, wherein, if the detected output voltage exceeds the certain overcharge detection voltage, the controller turns on the switching elements and, when a certain period has elapsed since the turning on, turns off the switching elements.

9. The overcharge protection device according to claim 1, further comprising:
a wiring board including a current-limiting resistor including a wiring pattern connected in series to the switching elements.

10. The overcharge protection device according to claim 9, wherein the wiring board includes a ground layer provided so as to cover the current-limiting resistor.

11. The overcharge protection device according to claim 9, wherein the current-limiting resistor is composed of a plurality of wiring patterns stacked in such a manner as to cancel out magnetic fields generated with current flowing through these wiring patterns.

12. The overcharge protection device according to claim 11, wherein
the current-limiting resistor includes at least one wiring pattern pair including the wiring patterns that are adjacently stacked and identical to each other, and
when current flows in opposite directions through the respective two wiring patterns included in the wiring pattern pair, magnetic fields generated by the respective two wiring patterns cancel out each other.
